# FASCICULE DE BREVET EUROPEEN

(11) **EP 0 737 123 B1**
(45) Date de publication et mention de la délivrance du brevet: **16.09.1998**
(21) Numéro de dépôt: 95904569.1
(22) Date de dépôt: 19.12.1994
(51) Int. Cl.: B29B 9/08, B29B 9/06, B29B 15/10, C08J 3/12, C08K 9/08

(54) **PROCEDE DE TRAITEMENT D'UNE POUDRE DE TALC EN VUE DE L'INCORPORER DANS UNE MATIERE THERMOPLASTIQUE**
VERFAHREN ZUR BEHANDLUNG EINES TALKUMPUDERS BEI DEM EINBRINGEN IN EINE KUNSTSTOFFMASSE
METHOD OF TREATING TALCUM POWDER FOR INCORPORATION INTO A THERMOPLASTIC MATERIAL IN PARTICULAR

(30) Priorité: 28.12.1993 FR 9315855
(43) Date de publication de la demande: 16.10.1996
(73) Titulaire: TALC DE LUZENAC, 09250 Luzenac (FR)
(72) Inventeur: FOURTY, Georges, F-31400 Toulouse (FR)
(74) Mandataire: Cabinet BARRE LAFORGUE & associés
(86) Numéro de dépôt international: FR9401490
(87) Numéro de publication internationale: WO9517998

(56) Documents cités:
- EP-A- 0 382 229
- GB-A- 1 178 846
- US-A- 4 241 001
- US-A- 4 814 019
- US-A- 5 176 751
- PATENT ABSTRACTS OF JAPAN vol. 16, no. 298 (C-0958) (5341) 2 Juillet 1992 & JP,A,04 081 440 (HITACHI CABLE LTD.) 16 Mars 1992
- DATABASE WPI Section Ch, Week 9250, Derwent Publications Ltd., London, GB; Class AGR, AN 92-410446 C50! & JP,A,04 306 261 (MITSUI PETROCHEM. IND. CO. LTD.) 29 Octobre 1992

## Description

L'invention concerne un procédé permettant d'incorporer une poudre de talc dans une matière, en particulier matière thermoplastique. Elle s'applique de façon particulièrement favorable pour incorporer des poudres fines de talc de granulométrie moyenne inférieure a 5 microns dans des matières thermoplastiques telles que polypropylène. L'invention s'étend au procédé de traitement de la poudre permettant cette incorporation et au produit obtenu à l'issu dudit traitement.

On sait que, dans de nombreuses applications, l'on incorpore du talc sous forme de poudre à une matière de base, notamment matière plastique ou thermoplastique pour en augmenter les caractéristiques mécaniques, en particulier la rigidité et la température de déformation. Toutefois, cette incorporation conduit généralement à une réduction de la résistance au choc et à la rayure du matériau obtenu. Il est connu que l'emploi d'une granulométrie très fine diminue ces deux défauts ; en particulier, il est admis que l'utilisation de poudres de granulométrie moyenne inférieure à 5 microns, et notamment de l'ordre de 2 microns, permet d'obtenir des pièces de caractéristiques satisfaisantes.

(Dans la suite on désignera par l'expression "fine poudre" une poudre de granulométrie moyenne inférieure ou égale à 5 microns.)

L'incorporation de fines poudres de talc dans un matériau pose en pratique de multiples problèmes. En effet, les fines poudres de talc sont très volatiles et les installations de mélange existantes sont très mal adaptées pour fonctionner avec des poudres très volatiles ; a titre d'exemple, la densité apparente d'une poudre de talc de granulométrie moyenne voisine de 2 microns est de l'ordre de 0,3. Des problèmes apparaissent notamment au niveau des doseurs qui ne permettent plus l'exécution de dosages réguliers et précis ; des difficultés apparaissent également pour le transfert des fines poudres depuis les trémies d'alimentation vers les vis sans fin de mélange, car la densité apparente très faible de la poudre confère à celle-ci un état intermédiaire entre l'état solide et l'état fluide (état analogue a celui d'une poudre fluidisée) qui interdit d'effectuer de façon satisfaisante ces transferts et mélanges par les moyens mécaniques classiques. Dans certains cas, il est totalement impossible d'assurer les transferts de poudre à partir de la trémie d'alimentation de l'installation. Dans d'autres cas, on constate des chutes de débit très importantes, ainsi que l'entraînement de grandes quantités d'air qui conduisent à des bullages des matériaux obtenus. On constate également des phénomènes de refoulement à travers les trémies d'alimentation qui engendrent la formation de quantités élevées de poussières. En outre, ces diverses difficultés limitent le pourcentage de fine poudre de talc qu'il est possible d'ajouter à la matière de base. Au-delà de 25 % de fine poudre, il n'est strictement plus possible, dans les installations connues, de réaliser les mélanges.

Pour tenter de remédier à ces inconvénients, certains fabricants de machines ont ajouté aux alimentations des vis de gavage en vue de densifier la masse de poudre qui est admise dans la machine. Ces vis de gavage apportent une amélioration pour des poudres de granulométrie intermédiaire moyenne (de 15 à 5 microns) mais fonctionnent très mal en cas d'utilisation de fine poudre car les vis de gavage ne parviennent pas à assurer une densification suffisante ; en outre, ces vis de gavage n'éliminent pas tous les défauts précédemment évoqués, en particulier les irrégularités de dosage (le dosage étant effectué en amont de l'alimentation à gavage).

Par ailleurs, le brevet US 4 241 001 décrit un procédé de fabrication de granulés denses à partir de poudre de talc, qui consiste à ajouter un agent mouillant à la poudre, notamment de l'eau, et à diviser mécaniquement la pâte obtenue en granulés. Ce brevet préconise l'adjonction de certains agents qui augmentent la cohésion de chaque granulé (émulsion huileuse, liant du type mélasse, liquide oléagineux...). Cette technique est toutefois inapte à résoudre le problème de l'invention consistant à permettre d'incorporer de fines poudres de talc dans des matières, en conservant les caractéristiques améliorées provenant de la faible taille des grains de la poudre. En effet, la cohésion et la stabilité des granulés obtenus dans cette technique rendent ceux-ci équivalents a une poudre de granulométrie plus élevée (égale a celle desdits granulés) : les difficultés pratiques d'incorporation sont supprimées mais l'on perd totalement les améliorations des caractéristiques de la matière, dues à une faible granulométrie du talc.

La présente invention se propose de fournir une nouvelle technique d'incorporation d'une poudre de talc dans une matière en vue de supprimer totalement les défauts sus-évoqués. Elle vise à permettre de profiter pleinement des avantages de l'incorporation de poudres de talc de faible granulométrie (augmentation des caractéristiques de la matière telles que rigidité et température de déformation, sans affecter notablement la résistance au choc et à la rayure de celle-ci) et ce, sans conduire à des difficultés pratiques d'incorporation des poudres dans la matière.

Un objectif de l'invention est en particulier de permettre d'effectuer l'incorporation de fine poudre de talc en utilisant les machines existantes.

Un autre objectif est d'obtenir avec ces machines les mêmes performances que celles obtenues pour l'incorporation de poudres plus denses présentant des granulométries beaucoup plus élevées.

A cet effet, le procédé conforme à l'invention pour incorporer une poudre de talc dans une matière se caractérise en ce que :
(a) on mélange la poudre de talc avec de l'eau et un polyéthylène glycol (PEG), polypropylène glycol (PPG) ou copolymère de ces composés, dans des proportions pondérales relatives comprises entre 10 % et 35 % d'eau par rapport au poids de talc sec et entre 0,05 % et 2 % de PEG, PPG ou copolymère par rapport au poids de talc sec,
(b) on presse le mélange à travers des filières et on le tronçonne à la sortie des filières de façon à obtenir des granulés de dimension moyenne supérieure à celle des grains de la poudre initiale,
(c) on incorpore les produits obtenus dans la matière soit sous la forme des granulés issus du tronçonnage, soit, après manutentions, sous la forme d'un mélange de poudre et d'agglomérats issu d'une désagrégation partielle de ces granulés,
(d) et on procède a une action mécanique de dispersion de façon à désagréger entièrement les granulés ou agglomérats pour libérer les grains de la poudre initiale et à répartir ceux-ci dans la masse de la matière.

Ainsi dans le procédé de l'invention, ce n'est plus la poudre de talc qui est mélangée à la matière de base, mais un produit densifié qui se présente sous la forme de granulés ou d'un mélange de poudre et d'agglomérats de grains de poudre. Ce produit densifié peut être transféré et mélangé sans difficulté en utilisant des installations classiques. Après mélange dans la matière, ces granulés ou agglomérats sont désagrégés pour libérer les grains de la poudre initiale, lesquels sont dispersés dans la matière pour aboutir à un résultat identique à celui obtenu par dispersion directe de la poudre initiale, mais en l'absence de toutes les difficultés techniques rencontrées avec une poudre de faible granulométrie. L'incorporation à la matière peut être effectuée en utilisant les granulés directement issus du tronçonnage (le cas échéant après une opération de séchage comme on le verra plus loin) ; il est également possible de faire subir aux granulés diverses opérations de manutention, transport, transfert, mise en silo... et d'incorporer ensuite le produit à la matière. Une certaine désagrégation des granulés intervient alors et le produit se présente sous la forme d'un mélange de poudre et d'agglomérats dont la densité a légèrement diminuée par rapport à celle des granulés. Par exemple une fine poudre de talc de granulométrie moyenne de 2 microns a une densité apparente tassée de l'ordre de 0,35 à 0,40 (Norme ISO 787/11) ; les granulés obtenus issus du tronçonnage ont une densité qui a augmenté à une valeur de l'ordre de 0,90 à 1,60 selon les conditions de mise en oeuvre ; après manutentions, on constate une légère diminution de la densité (de l'ordre de 10 % à 20 % selon le type de produit et les opérations de manutentions) : le produit conserve de toute façon une densité de l'ordre du double ou du triple de celle de la poudre initiale. La faculté de libérer ensuite les grains de poudre et de les redisperser lors de l'incorporation dans la matière, est due à l'adjonction du PEG, PPG ou copolymère dans les proportions sus-évoquées lors de l'étape (a) du procédé : si ce composé n'est pas ajouté, on constate qu'une partie des agglomérats demeure dans la matière et forme de petits grumeaux non homogènes de sorte qu'il n'est plus possible de profiter pleinement des améliorations des caractéristiques dues à l'ajout de la fine poudre de talc ; d'une part, on observe une chute de la résistance au choc et à la rayure de la matière (du même ordre que celle obtenue avec des poudres plus grossières) : l'on perd alors l'intérêt de l'utilisation d'une poudre fine ou très fine ; d'autre part, l'absence d'homogénéité du talc à l'intérieur de la matière est un facteur qui limite l'amélioration des autres caractéristiques mécaniques de la matière. En outre, à la sortie de la plupart des installations de mélange, il existe un tamis à travers lequel passe la matière de base à l'état fondu après incorporation du talc ; les agglomérats de talc non dispersés colmatent ce tamis jusqu'à interrompre le fonctionnement de l'installation. L'adjonction du PEG, PPG ou copolymère dans les proportions sus-définies permet au contraire d'obtenir une libération totale des grains de la poudre initiale et une dispersion parfaite de ceux-ci dans la matière, par un mécanisme qui est à l'heure actuelle mal expliqué. Par "adjonction de PEG, PPG ou copolymère", on entend aussi bien l'adjonction de l'un de ces composés que l'adjonction d'un mélange quelconque desdits composés. (Il est à noter que le PEG est cité dans le brevet US 4 814 019 comme composé utilisable en mélange avec certains condensats pour augmenter la blancheur et/ou la stabilité thermique de certains talcs d'origine chinoise, australienne ou italienne).

Lorsque la poudre de talc doit être incorporée dans une matière organique, par exemple dans une matière plastique ou thermoplastique, avant leur incorporation dans la matière, on sèche de préférence les granulés de façon à en éliminer l'eau jusqu'à atteindre un pourcentage pondéral d'humidité résiduelle inférieur à 0,5 % d'eau par rapport au poids de talc sec.

Par ailleurs, on obtient un excellent résultat en utilisant un PEG, PPG ou copolymère de masse moléculaire comprise entre 100 et 50 000. De préférence, on met d'abord en solution le PEG, PPG ou copolymère dans l'eau, puis on introduit la poudre de talc dans la solution pour obtenir le mélange. (A noter que le PEG ou PPG de masse moléculaire comprise entre 100 et 600 se présente sous forme liquide ; il se présente sous forme solide soluble dans l'eau pour des masses moléculaires comprises entre 600 et 50 000. Pour les masses moléculaires élevées (supérieures à 2 000), on utilise de préférence le produit à l'état finement divisé de façon a faciliter sa dissolution dans l'eau.

Les conditions du mélange qui fournissent les meilleures performances sont les suivantes :
- proportion pondérale d'eau comprise entre 15 % et 30 % par rapport au poids de talc sec,
- proportion pondérale de PEG, PPG ou copolymère comprise entre 0,1 % et 0,5 % par rapport au poids de talc sec.

Le pressage du mélange et la découpe à la sortie des filières sont de préférence réalisées de façon que la dimension moyenne des granulés soit comprise entre 3 mm et 20 mm.

Le procédé est particulièrement favorable pour incorporer à une matière de base une fine poudre de talc, c'est-à-dire une poudre de granulométrie moyenne inférieure ou égale à 5 microns.

Le procédé de l'invention s'applique notamment pour incorporer une poudre de talc comme charge dans une matière thermoplastique. Selon un premier mode de mise en oeuvre, après mélange, pressage, extrusion, tronçonnage et préférentiellement séchage, on incorpore et on mélange les granulés de talc obtenus dans la matière thermoplastique à l'état solide divisé, on chauffe l'ensemble jusqu'à fondre la matière thermoplastique et on procède à l'action mécanique de dispersion en malaxant la matière visqueuse obtenue.

Selon un autre mode de mise en oeuvre, on chauffe d'abord la matière thermoplastique jusqu'à la fusion, on incorpore ensuite les granulés de talc dans la matière thermoplastique fondue et on procède à l'action mécanique de dispersion en malaxant la matière visqueuse obtenue.

La matière thermoplastique peut notamment être du polypropylène (homopolymère, copolymère ou un mélange de l'un de ces produits avec un élastomère, le PP restant en proportion majoritaire), les granulés de talc étant incorporés à ladite matière dans une proportion pondérale fonction de l'application, généralement comprise entre 5 % et 60 % de talc par rapport au propylène.

L'invention s'étend, en tant que produit nouveau au produit intermédiaire obtenu destiné à être incorporé comme charge dans une matière ; ce produit de densité apparente tassée comprise entre 0,4 et 1,6 comprend des granulés ou agglomérats de grains de talc contenant entre 0,1 % et 2 % de PEG, PPG ou copolymère de ces composés, les grains de talc ayant une taille inférieure ou égale à 5 microns (La densité apparente tassée est mesurée selon la norme ISO 787/11).

L'invention est illustrée par les exemples qui suivent qui ont été mis en oeuvre dans des installations telles que schématisées à titre d'exemples sur les dessins ; sur ces dessins :
- la figure 1 est un schéma d'une installation de granulation permettant d'obtenir le produit intermédiaire visé par l'invention,
- la figure 2 est une coupe schématique de l'ensemble de pressage de cette installation,
- la figure 3 est une représentation schématique à échelle agrandie du produit obtenu après tronçonnage,
- la figure 4 est une représentation schématique à échelle agrandie du produit obtenu après manutentions,
- la figure 5 est un schéma d'une installation de mélange de ce produit à une matière thermoplastique.

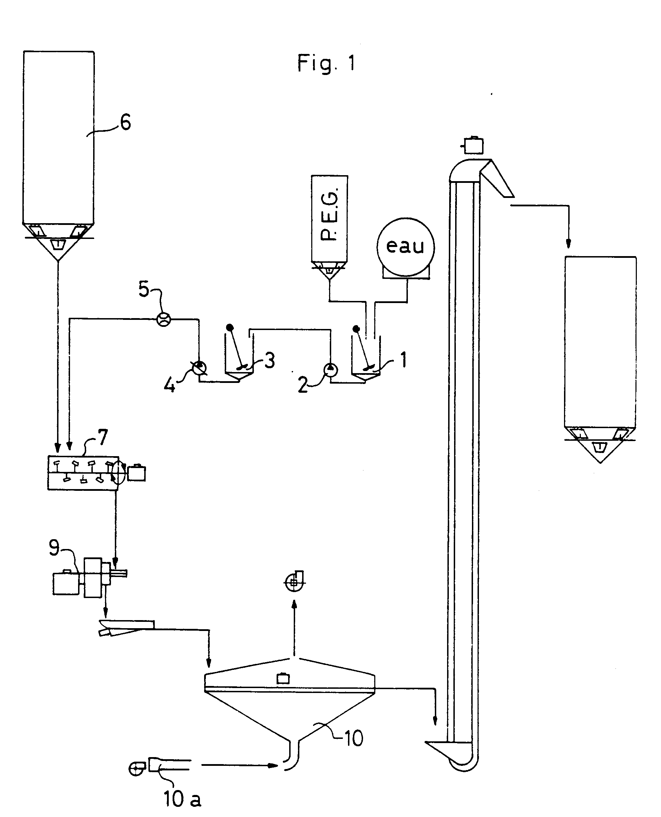

L'installation représentée à la figure 1 comprend des ensembles classiques en eux-mêmes : cuve 1 de préparation d'une solution aqueuse de PEG à 1,66 % (concentration pondérale), pompe 2 de transfert vers une cuve tampon 3 de distribution, pompe doseuse 4, débitmètre 5, trémie 6 d'alimentation en fine poudre de talc, mélangeur 7 de la solution aqueuse de PEG et du talc, presse 9 à granuler, sécheur 10 avec son brûleur 10a, apte à ramener le taux d'humidité à une valeur inférieure à 0,5 %.

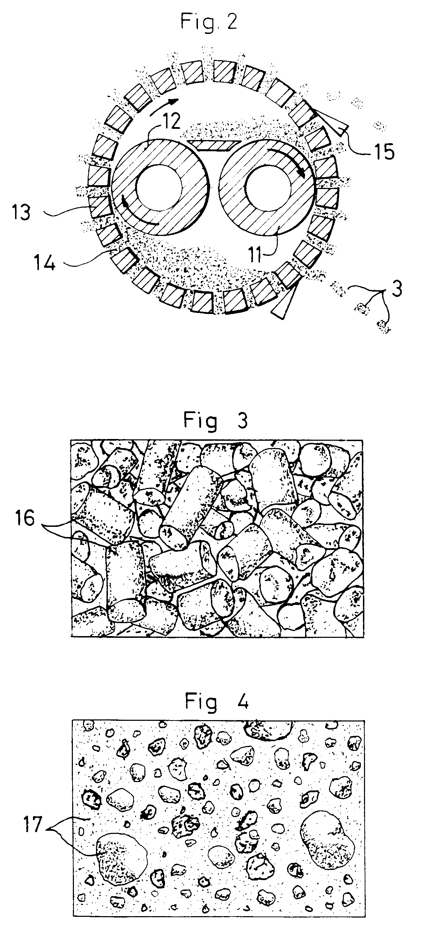

La figure 2 représente l'ensemble de pressage et de tronçonnage de la presse 9. Cet ensemble, en lui-même classique, comprend deux galets 11 et 12 qui tournent à l'intérieur d'un cylindre 13 portant une pluralité de filières telles que 14 ; le cylindre 13 est entraîné en rotation par un moteur et entraîne les galets par friction. Des jeux de couteaux tels que 15 sont prévus à la sortie des filières pour tronçonner les "cordonnets" obtenus.

Le produit obtenu est schématisé à la figure 3. Il est constitué de granulés formés par de petits tronçons cylindriques de poudre de talc aggloméré.

A la figure 4, on a schématisé ce même produit après les diverses manutentions suivantes : mise en silo, remplissage d'un camion-citerne, transport sur 1 000 km et remise en silo. Le produit se présente sous la forme de poudre mélangée à des agglomérats de grains ayant des tailles qui s'échelonnent depuis la taille du grain initial de poudre jusqu'à des agglomérats millimétriques.

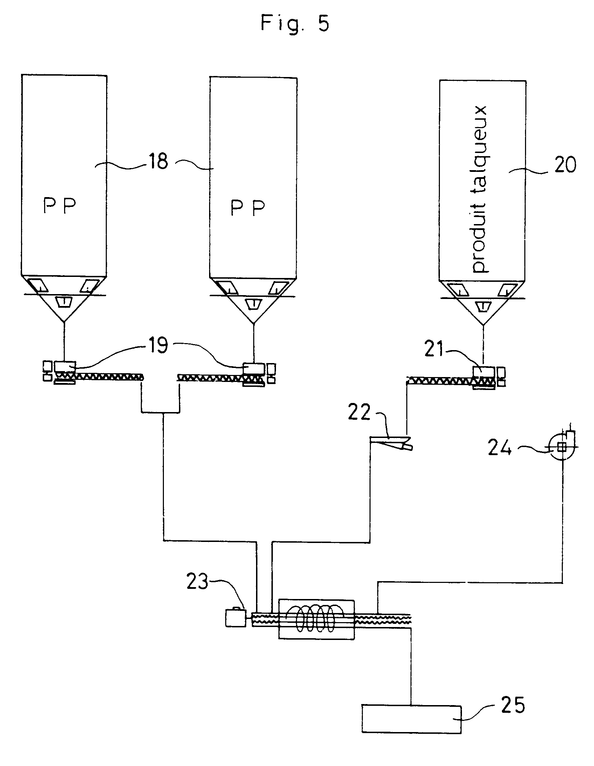

La figure 5 montre une installation de mélange à une matière thermoplastique constituée par du polypropylène (PP). Cette installation est classique et comprend essentiellement : des trémies 18 d'alimentation en PP, un doseur pondéral 19 de PP, un silo 20 d'alimentation en produit talqueux, un doseur 21 de ce produit, une unité 22 d'alimentation du produit talqueux, une machine mélangeuse 23 à vis mélangeuses horizontales (comprenant des éléments de chauffage, des moteurs...), une pompe à vide 24 pour éliminer les produits volatils, et un système de granulation 25. Dans cette installation, le produit talqueux est mélangé après fusion du PP ; dans d'autres installations, l'alimentation du talc s'effectue au niveau du PP non fondu.

En sortie de l'installation, après refroidissement, on obtient des granulés de PP à l'intérieur desquels sont dispersés les grains de poudre de talc initiale.

A titre de comparaison, à l'exemple 1, on fait un essai en disposant dans le silo 20 le produit intermédiaire fabriqué conformément à l'invention, un essai en utilisant une poudre de talc traitée en l'absence de PEG, et un essai en utilisant une poudre de talc non traitée.

### Exemple 1

### Préparation du produit intermédiaire conforme à l'invention.

- talc initial : poudre de granulométrie moyenne de 1,7 micron de talc vendu par la Société Talc de Luzenac sous la marque déposée "Steamic OOS",
- densité apparente tassée du talc initial : 0,35,
- proportion d'eau par rapport au poids de talc sec : 18 %,
- proportion de PEG par rapport au poids de talc sec : 0,3 %,
- poids moléculaire de PEG : 20 000 (type "Carbowax 20 M" de la Société Union Carbide,
- séchage jusqu'à un taux d'humidité de 0,2 % (air chaud à 150° C).

En sortie du sécheur 10, les granulés 16 présentent les caractéristiques suivantes :
- densité apparente tassée : 0,95,
- granulométrie mesurée par tamisage : 48,6 % de granulés de taille supérieure à 2 mm, 24,5 % entre 1 et 2 mm, 12,3 % entre 0,5 et 1 mm et 14,6 % au dessous de 0,5 mm.

Après manutentions, le produit 17 présente les caractéristiques suivantes :
- densité apparente tassée : 0,84,
- granulométrie : 12,5 % d'agglomérats de taille supérieure à 2 mm, 20,4 % entre 1 et 2 mm, 24,5 % entre 0,5 et 1 mm, et 42,6 % inférieure à 0,5 mm,
- humidité résiduelle : 0,19 %.

### Incorporation à la matière de base.

Le produit sus-évoqué est incorporé après manutentions à du polypropylène du type "PPN 1060" de la Société Hoechst à raison de 40 % en poids, avec des adjuvants classiques : stéarate de calcium (0,1 %), phénol bloqué (0,3 %), distéaryl-thio-dipropionate (0,3 %).

L'alimentation de l'installation de mélange s'effectue sans problème avec un débit égal à celui obtenu avec des poudres de talc de granulométrie moyenne supérieure à 10 microns. Le dosage demeure régulier et précis. On n'observe aucune formation anormale de poussière.

Les granulés de matière plastique obtenus sont analysés et on constate que le talc est parfaitement dispersé sous forme des grains initiaux. Les caractéristiques mécaniques d'éprouvettes fabriquées avec ces granulés sont indiqués dans le tableau fourni plus loin.

### Essai comparatif avec une foudre de talc non traitée.

La poudre de talc initiale est directement disposée dans le silo 20 d'alimentation de l'installation de mélange. Le débit est réduit de moitié. Le dosage devient irrégulier (vérification par taux de cendre à intervalle régulier) et varie de 36 % à 44 %. Une formation importante de poussière est observée.

### Essai comparatif avec du talc traité sans PEG.

La poudre de talc initiale est traitée comme dans l'invention mais sans ajout de PEG dans l'eau.

La mise en oeuvre dans l'installation de mélange est comparable à celle obtenue dans l'invention. Toutefois, dans les granulés de polypropylène obtenus, on observe une mauvaise répartition du talc, avec présence d'agglomérats non dispersés.

Le tableau ci-dessous donne les caractéristiques d'éprouvettes réalisées lors des essais précédents.

| | Module d'élasticité en flexion (MPa) | Résistance au choc Charpy methode 1D (KJ/m²) | Stabilité thermique à 150° C (jours) |
|---|---|---|---|
| Procédé de l'invention (traitement avec PEG) | 4 600 | 30 | 15 |
| Poudre de talc non traitée | 4 600 | 30,9 | 7 |
| Poudre de talc traitée sans PEG | 4 600 | 25,8 | 7 |

On constate que le procédé de l'invention permet d'atteindre les performances obtenues avec l'addition d'une fine poudre de talc, sans les inconvénients de mise en oeuvre et avec une meilleure stabilité thermique. La résistance au choc est un indicateur de l'homogénéité du mélange talc/PP et de la qualité de la dispersion du talc dans le PP.

## Revendications

1. Procédé pour incorporer une poudre de talc dans une matière, en particulier matière thermoplastique, selon lequel :
(a) on mélange la poudre de talc avec de l'eau et un polyéthylène glycol (PEG), un polypropylène glycol (PPG), ou un copolymère de ces composés, dans des proportions pondérales relatives comprises entre 10 % et 35 % d'eau par rapport au poids de talc sec et entre 0,05 % et 2 % de PEG, PPG ou copolymère par rapport au poids de talc sec,
(b) on presse le mélange à travers des filières et on le tronçonne à la sortie des filières de façon à obtenir des granulés de dimension moyenne supérieure a celle des grains de la poudre initiale,
(c) on incorpore dans la matière les produits obtenus soit sous la forme des granulés issus du tronçonnage, soit, après manutentions, sous la forme d'un mélange de poudre et d'agglomérats issu d'une désagrégation partielle des granulés,
(d) et on procède à une action mécanique de dispersion de façon à désagréger entièrement les granulés ou agglomérats pour libérer les grains de la poudre initiale et à répartir ceux-ci dans la masse de la matière.

2. Procédé selon la revendication 1 pour incorporer la poudre de talc dans une matière organique, caractérisé en ce que, avant leur incorporation dans la matière, on sèche les granulés de façon a en éliminer l'eau jusqu'à atteindre un pourcentage pondéral d'humidité résiduelle inférieur à 0,5 % d'eau par rapport au poids de talc sec.

3. Procédé selon l'une des revendications 1 ou 2, caractérisé en ce que (a) on utilise un PEG, PPG ou copolymère, de masse moléculaire comprise entre 100 et 50 000.

4. Procédé selon l'une des revendications 1, 2 ou 3, caractérisé en ce que (a) on met d'abord en solution le PEG, PPG ou copolymère, dans l'eau, puis on introduit la poudre de talc dans la solution pour obtenir le mélange.

5. Procédé selon l'une des revendications 1, 2, 3 ou 4, caractérisé en ce que (a) le mélange est réalisé avec une proportion pondérale d'eau comprise entre 15 % et 30 % et une proportion pondérale de PEG, PPG ou copolymère, comprise entre 0,1 % et 0,5 % par rapport au poids de talc sec.

6. Procédé selon l'une des revendications 1, 2, 3, 4 ou 5, caractérisé en ce que (b) on presse le mélange et on le tronçonne de façon que la dimension moyenne des granulés soit comprise entre 3 mm et 20 mm.

7. Procédé conforme à l'une des revendications 1, 2, 3, 4, 5 ou 6 pour incorporer une poudre de talc comme charge dans une matière thermoplastique, dans lequel (c) on incorpore et on mélange les granulés de talc dans la matière thermoplastique à l'état solide divisé, on chauffe l'ensemble jusqu'à fondre la matière thermoplastique et on procède à l'action mécanique de dispersion en malaxant la matière visqueuse obtenue.

8. Procédé conforme a l'une des revendications 1, 2, 3, 4, 5 ou 6 pour incorporer une poudre de talc comme charge dans une matière thermoplastique, dans lequel on chauffe la matière thermoplastique jusqu'à la fusion, (c) on incorpore les granulés de talc dans la matière thermoplastique fondue et on procède à l'action mécanique de dispersion en malaxant la matière visqueuse obtenue.

9. Procédé selon l'une des revendications 7 ou 8, dans lequel la matière thermoplastique est du polypropylène, les granulés de talc étant incorporés à ladite matière de façon que la proportion pondérale de talc soit comprise entre 5 % et 60 % par rapport au polypropylène.

10. Application du procédé conforme à l'une des revendications 1 à 9 pour incorporer dans une matière une poudre de talc de granulométrie moyenne inférieure ou égale à 5 microns.

11. Procédé de traitement d'une poudre de talc présentant en particulier une granulométrie moyenne inférieure ou égale à 5 microns, en vue d'accroître la densité apparente de celle-ci, selon lequel :
. on mélange la poudre de talc avec de l'eau et un polyéthylène glycol (PEG), un polypropylène glycol (PPG) ou un copolymère de ces composés, dans des proportions pondérales relatives comprises entre 10 % et 35 % d'eau par rapport au poids de talc sec et entre 0,1 % et 2 % de PEG, PPG ou copolymère par rapport au poids de talc sec,
. on presse le mélange à travers des filières et on le tronçonne à la sortie des filières de façon à obtenir des granulés de dimension moyenne supérieure à celle des grains de la poudre initiale,
. on sèche les granulés de façon à en éliminer l'eau jusqu'à atteindre un pourcentage pondéral d'humidité résiduelle inférieur à 0,5 % d'eau par rapport au poids de talc sec.

12. Procédé de traitement selon la revendication 11, caractérisé en ce que l'on réalise le mélange en utilisant un PEG, PPG ou copolymère de masse moléculaire comprise entre 100 et 50 000, dans une proportion pondérale comprise entre 0,2 % et 0,5 % par rapport au poids de talc sec.

13. Procédé de traitement selon l'une des revendications 11 ou 12, caractérisé en ce que l'on réalise le mélange en prévoyant une proportion pondérale d'eau comprise entre 15 % et 30 % par rapport au poids de talc sec.

14. Produit à l'état solide divisé, destiné à être incorporé comme charge dans une matière, en particulier matière thermoplastique, comprenant des grains de talc de taille moyenne inférieure ou égale à 5 microns, dans lequel
au moins une fraction des grains de talc sont liés entre eux sous la forme de granulés ou agglomérats de dimension moyenne supérieure à celles des grains de talc,
du PEG, PPG ou copolymère de ces composés étant mélangé au produit en proportion comprise entre 0,1 % et 2 % par rapport au poids de talc sec,
la densité apparente tassée du produit étant comprise entre 0,4 et 1,6.

## Claims

1. Method for incorporating a talc powder in a material, in particular a thermoplastic material, wherein :
(a) the talc powder is mixed with water and a polyethylene glycol (PEG), a polypropylene glycol (PPG) or a copolymer of these compounds, in relative weight proportions of between 10 % and 35 % of water based on the weight of dry talc and between 0.05 % and 2 % of PEG, PPG or copolymer based on the weight of dry talc,
(b) the mixture is pressed through dies and cut into lengths on leaving the dies so as to obtain granules having an average size greater than that of the particles of the initial powder,
(c) the products are incorporated in the material either in the form of granules resulting from the process of cutting into lengths or, after handling operations, in the form of a mixture of powder and agglomerates resulting from a partial disintegration of the granules,
(d) the granules or agglomerates are subjected to a mechanical dispersive action so as to de-aggregate them completely in order to liberate the initial powder particles and to distribute these in the mass of material.

2. Method according to claim 1 for incorporating talc powder in an organic material, characterized in that, before the granules are incorporated in the material, they are dried so as to remove water until a weight percentage residual moisture content is obtained of less than 0.5 % water based on the weight of dry talc.

3. Method according to either of claims 1 or 2, characterized in that (a) use is made of PEG, PPG or a copolymer having a molecular weight of between 100 and 50,000.

4. Method according to one of claims 1, 2 or 3, characterized in that (a) the PEG, PPG or copolymer is dissolved in water and the talc powder is then introduced into the solution to obtain the mixture.

5. Method according to one of claims 1, 2, 3 or 4, characterized in that (a) the mixture is prepared with a weight proportion of water of between 15 % and 30 % and a weight proportion of PEG, PPG or copolymer of between 0.1 % and 0.5 % based on the weight of dry talc.

6. Process according to one of claims 1, 2, 3, 4 or 5, characterized in that (b) the mixture is pressed and cut into lengths so that the average size of the granules is between 3 mm and 20 mm.

7. Method according to one of claims 1, 2, 3, 4, 5 or 6 for incorporating a talc powder as a filler in a thermoplastic material, in which (c) the granules of talc are incorporated and mixed in the thermoplastic material in the divided solid state, the whole is heated until the thermoplastic material melts and a mechanical dispersive action is produced by blending the viscous material obtained.

8. Method according to one of claims 1, 2, 3, 4, 5 or 6 for incorporating a talc powder as a filler in a thermoplastic material, in which the thermoplastic material is heated until it melts, (c) the granules of talc are incorporated in the molten thermoplastic material and a mechanical dispersive action is produced by blending the viscous material obtained.

9. Method according to either of claims 7 or 8, in which the thermoplastic material is polypropylene, the talc granules being incorporated in the said material so that the weight proportion of talc is between 5 % and 60 % based on the polypropylene.

10. Application of the method according to one of claims 1 to 9 for incorporating a talc powder having an average particle size less than or equal to 5 microns in a material.

11. Method for treating a talc powder having in particular an average particle size less than or equal to 5 microns, with a view to increasing the apparent density thereof, wherein :
. the talc powder is mixed with water and a polyethylene glycol (PEG), a polypropylene glycol (PPG) or a copolymer of these compounds, in relative weight proportions of between 10 % and 35 % of water based on the weight of dry talc and between 0.1 % and 2 % of PEG, PPG or copolymer based on the weight of dry talc,
. the mixture is pressed through dies and cut into lengths on leaving the dies so as to obtain granules having an average size greater than that of the particles of the initial powder,
. the granules are dried so as to remove water until a weight percentage residual moisture content is obtained of less than 0.5 % water based on the weight of dry talc.

12. Treatment method according to claim 11, characterized in that the mixture is prepared by using PEG, PPG or a copolymer with a molecular weight between 100 and 50 000 in a weight proportion of between 0.2 % and 0.5 % based on the weight of dry talc.

13. Treatment method according to either of claims 11 or 12, characterized in that the mixture is prepared by providing a weight proportion of water of between 15 % and 30 % based on the weight of dry talc.

14. Product in the divided solid state, intended to be incorporated as a filler in a material, in particular a thermoplastic material, comprising talc particles having an average particle size less than or equal to 5 microns, wherein
at least a fraction of the talc particles are bonded together in the form of granules or agglomerates with an average size greater than that of the talc particles,
PEG, PPG or a copolymer of these compounds being mixed with the product in a proportion of between 0.1 % and 2 % based on the weight of dry talc,
the apparent packed density of the product being between 0.4 and 1.6.

## Patentansprüche

1. Verfahren zum Einbringen eines Talkumpuders in eine Masse, insbesondere eine Thermoplastmasse, umfassend die folgenden Schritte:
(a) Vermischen des Talkumpuders mit Wasser und einem Polyethylenglykol (PEG), einem Polypropylenglykol (PPG) oder einem Copolymer dieser Zusammensetzungen in relativen Gewichtsanteilen zwischen 10 und 35% Wasser bezogen auf das Gewicht des trockenen Talkums und zwischen 0,05 und 2% PEG, PPG oder Copolymer bezogen auf das Gewicht des trockenen Talkums,
(b) Pressen des Gemisches durch Spritzmundstücke und Zerkleinern desselben am Ausgang der Spritzmundstücke, um Körnchen mit einer durchschnittlichen Größe zu erhalten, die größer ist als die der Partikel des Ausgangspuders,
(c) Einbringen des erhaltenen Produktes entweder in Form der zerkleinerten Körnchen oder, nach der Behandlung, in Form eines Pudergemisches und Konglomerats infolge einer teilweisen Auflösung der Körnchen, und
(d) Durchführen eines mechanischen Dispergierungsvorgangs, so daß das Granulat oder Konglomerat vollständig aufgelöst wird, um die Partikel des Ausgangspuders freizusetzen und sie in der Masse zu verteilen.

2. Verfahren nach Anspruch 1 zum Einbringen des Talkumpuders in eine organische Masse, dadurch gekennzeichnet, daß das Granulat vor dem Einbringen in die Masse getrocknet wird, um das Wasser daraus zu entfernen, bis ein Gewichtsprozentanteil an Restfeuchtigkeit von weniger als 0,5% Wasser bezogen auf das Gewicht des trockenen Talkums erreicht ist.

3. Verfahren nach Anspruch 1 oder 2, dadurch gekennzeichnet, daß (a) ein PEG, PPG oder Copolymer mit einer Molekularmasse zwischen 100 und 50.000 verwendet wird.

4. Verfahren nach Anspruch 1, 2 oder 3, dadurch gekennzeichnet, daß (a) das PEG, PPG oder Copolymer zunächst in dem Wasser aufgelöst und dann das Talkumpuder der Lösung zugegeben wird, um das Gemisch zu erhalten.

5. Verfahren nach Anspruch 1, 2, 3 oder 4, dadurch gekennzeichnet, daß (a) das Gemisch mit einem Gewichtsanteil von Wasser zwischen 15 und 30% und einem Gewichtsanteil von PEG, PPG oder Copolymer zwischen 0,1 und 0,5% bezogen auf das Gewicht des trockenen Talkums hergestellt wird.

6. Verfahren nach Anspruch 1, 2, 3, 4 oder 5, dadurch gekennzeichnet, daß (b) das Gemisch verdichtet und dann so zerkleinert wird, daß die durchschnittliche Körnchengröße zwischen 3 mm und 20 mm beträgt.

7. Verfahren nach Anspruch 1, 2, 3, 4, 5 oder 6 zum Einbringen eines Talkumpuders als Füllstoff in eine Thermoplastmasse, wobei (c) das Talkumgranulat in einem zerkleinerten festen Aggregatzustand in die Thermoplastmasse eingebracht und vermischt, das Ganze zum Schmelzen der Thermoplastmasse erhitzt und dann einem mechanischen Dispergierungsvorgang unterzogen wird, indem die erhaltene viskose Masse geknetet wird.

8. Verfahren nach Anspruch 1, 2, 3, 4, 5 oder 6 zum Einbringen eines Talkumpuders als Füllstoff in eine Thermoplastmasse, wobei die Thermoplastmasse bis zum Schmelzen erhitzt wird, (c) das Talkumgranulat in die geschmolzene Thermoplastmasse eingebracht und dann einem mechanischen Dispergierungsvorgang unterzogen wird, indem die erhaltene viskose Masse geknetet wird.

9. Verfahren nach Anspruch 7 oder 8, bei dem die Thermoplastmasse Polypropylen ist, wobei das Talkumgranulat so in die genannte Masse eingebracht wird, daß der Gewichtsanteil des Talkums zwischen 5 und 60% bezogen auf das Gewicht des Polypropylens beträgt.

10. Anwendung des Verfahrens nach einem der Ansprüche 1 bis 9 zum Einbringen eines Talkumpuders mit einer durchschnittlichen Körnchengröße von gleich oder kleiner als 5 Mikron in eine Masse.

11. Verfahren zur Behandlung eines Talkumpuders, insbesondere mit einer durchschnittlichen Körnchengröße von gleich oder kleiner als 5 Mikron, im Hinblick auf eine Erhöhung von dessen Füllgewicht, umfassend die folgenden Schritte:
Vermischen des Talkumpuders mit Wasser und einem Polyethylenglykol (PEG), einem Polypropylenglykol (PPG) oder einem Copolymer dieser Zusammensetzungen in relativen Gewichtsanteilen zwischen 10 und 35% Wasser bezogen auf das Gewicht des trockenen Talkums und zwischen 0,1 und 2% PEG, PPG oder Copolymer bezogen auf das Gewicht des trockenen Talkums,
Pressen des Gemisches durch Spritzmundstücke und Zerkleinern desselben am Ausgang der Spritzmundstücke, so daß Körnchen mit einer durchschnittlichen Größe erhalten werden, die größer ist als die der Partikel des Ausgangspuders,
Trocknen der Körnchen zum Entfernen des Wassers, bis ein Gewichtsanteil an Restfeuchtigkeit von weniger als 0,5% Wasser bezogen auf das Gewicht des trockenen Talkums erreicht ist.

12. Behandlungsverfahren nach Anspruch 11, dadurch gekennzeichnet, daß das Gemisch mit PEG, PPG oder Copolymer mit einer Molekularmasse zwischen 100 und 50.000 in einem Gewichtsanteil zwischen 0,2 und 0,5% bezogen auf das Gewicht des trockenen Talkums hergestellt wird.

13. Behandlungsverfahren nach Anspruch 11 oder 12, dadurch gekennzeichnet, daß das Gemisch mit einem Gewichtsanteil Wasser zwischen 15 und 30% bezogen auf das Gewicht des trockenen Talkums hergestellt wird.

14. Produkt im zerkleinerten festen Aggregatzustand zum Einbringen als Füllstoff in eine Masse, insbesondere eine Thermoplastmasse, umfassend Talkumpartikel mit einer durchschnittlichen Größe von gleich oder kleiner als 5 Mikron, bei dem
wenigstens ein Bruchteil der Talkumpartikel untereinander in Form eines Granulats oder Konglomerats mit einer durchschnittlichen Größe gebunden ist, die größer ist als die der Talkumpartikel,
PEG, PPG oder Copolymer dieser Zusammensetzungen mit dem Produkt in einem Anteil zwischen 0,1 und 2% bezogen auf das Gewicht des trockenen Talkums vermischt ist,
das zusammengedrückte Füllgewicht des Produktes zwischen 0,4 und 1,6 beträgt.
